# EUROPEAN PATENT SPECIFICATION

(11) **EP 4 528 100 B1**
(45) Date of publication and mention of the grant of the patent: **08.07.2026**
(21) Application number: 23210243.4
(22) Date of filing: 16.11.2023
(51) Int. Cl.: F03D 80/80

(54) **A SYSTEM TO RETROFIT POWER CABLES IN AN ERECTED WIND TURBINE AND METHOD THEREOF**
SYSTEM ZUM NACHRÜSTEN VON STROMKABELN IN EINER ERRICHTETEN WINDTURBINE UND VERFAHREN DAFÜR
SYSTÈME POUR RÉNOVER DES CÂBLES D'ALIMENTATION DANS UNE ÉOLIENNE ÉRIGÉE ET PROCÉDÉ ASSOCIÉ

(30) Priority: 22.09.2023 IN 202311063713
(43) Date of publication of application: 26.03.2025
(73) Proprietor: RE Technologies GmbH, 22083 Hamburg (DE)
(72) Inventor: Anbalagan, Damodaran, 560049 BANGALORE (IN); Manjunath, V Shetty, 560038 BANGALORE (IN); Jiji, George M, 683212 KERALA (IN)
(74) Representative: Buzzi, Notaro & Antonielli d'Oulx S.p.A.

(56) References cited:
- EP-A1- 2 762 723
- EP-B1- 2 859 228
- WO-A1-2019/212474
- CN-U- 205 791 366
- US-A1- 2009 206 610
- US-A1- 2015 222 106
- US-B2- 6 945 356

## Description

### Field of the Invention

The present invention relates to a wind turbine. Particularly, the present invention provides support structure to retrofit power cables in the erected wind turbine.

### Background of the Invention

The following background discussion includes information that may be useful in understanding the present invention. It is not an admission that any of the information provided herein is prior art or relevant to the presently claimed invention, or that any publication specifically or implicitly referenced is prior art.

Generally, power cable installation in an erected WTG is not the usual approach. Further to fasten the power cable the known to use cable clamps. The cable clamps are arranged on traverse support bars preferably. The support bars are mounted to the construction wall or to a suitable constructive structure in the construction. The support bars are connected in more or less equal distances to each other with the construction along the longitudinal extension of the construction.

Further for installing the power cables cable ladders or cable trays can be used. The support bars, cable ladders, cable trays or the like are connected with the construction after the construction is erected or built. During installation single cables or bundles of cables are brought into a wind turbine tower, for example through an opening of the tower. They are pulled up into the tower with the help of a hoist gear or the like. Thereafter each single cable needs to be fastened along its length; thus, the mounting is laborious and time expensive. Further, there have been several documents disclosing the about the installation of power cables on the wind turbines. For example, US11371489B2 discloses a wind turbine comprises the tower, a nacelle and a rotor having at least one rotor blade. The tower is configured for supporting the nacelle and the rotor on a support system. The tower itself may be structured as having an upper top end for supporting the nacelle and a lower support end for being placed on the support system. Electric energy generated is transported via power cables from the nacelle to an electric grid, preferably via power electronic components, switches and/or transformers. Furthermore, the nacelle may rotate around the yaw axis according to the current wind direction. Hence, the rotation of the nacelle introduces a twist into the power cables, wherein said twist causes a deviation (shortening) in the length of the power cables. Furthermore, the tower comprises at least one radial cable guiding device for receiving the cable and a cable support arrangement for supporting the cable in a beneficial manner. However, this patent is based on the mechanical components for installing the power cable and the system is not useful for installing the power cable on the erected wind turbine system.

Further, US 10612527B2 a method for refurbishing a wind turbine includes terminating use of an existing up tower electrical system of the wind turbine. The method also includes installing a new up tower electrical system for the wind turbine at an up-tower location of the wind turbine. Further, the method includes providing an electrical adaptor at an up-tower location for connecting the new up tower electrical system with an existing down tower electrical system. Moreover, the method includes electrically connecting the electrical adaptor between the existing down tower electrical system and the new up-tower electrical system. This document discloses installation of replacing at least one up tower electrical system or the down tower electrical system by installing at least one new electrical system in an up-tower location or a down tower location of the wind turbine. This patent is also based on the mechanical components for installing the power cable and the system is not useful for installing the power cable on the erected wind turbine system.

Another document, JP2006246549A discloses able laying device for laying a cable 5 to be used for the wind energy conversion system in a tower, includes a support wire 12 which is threaded into a through hole 13 made in the flower 11 within the tower, and a cable supporting means 8 which is attached to the support wire 12 and also to which the cable 5 is fixed. The cable supporting means 8 has a supporting metal fitting which is to be attached to the support wire 12, and a cable fixing means which fixes the cable 5 to the outside of the supporting metal fitting, and the supporting metal fitting is set freely to a wall part which forms the through hole 13.

The above-mentioned documents are based on the mechanical components for installing the power cable and the system/s are not useful for installing the power cable on the erected wind turbine system.

EP2859228B1, US6945356B2, US2015/222106A1 and WO2019/212474A1 are other relevant examples of prior art.

Thus, there is needed a system and method that is configured to install the power cables to an installed and running turbine. Further, there is also a dearth of method and system which is configured to install power cable to the running turbine and suitable to hold the power cable system, withstand the dynamic forces experienced throughout the power cable installation tenure.

There is also a need for a turbine system that provides support structure to retrofit power cables to erected wind turbine. Further, there is needed a system which can retrofit the power cables in the erected wind turbine without any welding work or any hole/drill in the tower wall.

### Object(s) of the Invention:

A primary object of the present invention is to overcome the drawbacks associated with the prior art.

Yet another object of the present invention is to provide a support structure to retrofit power cables in the erected wind turbine.

Yet another object of the present invention is to provide a support structure to retrofit power cables in the erected wind turbine where the support includes T brackets and inclined T shaped brackets.

Yet another object of the present invention is to provide a support structure to retrofit power cables in the erected wind turbine where the support includes T brackets and inclined T shaped brackets which can be mounted on tower flanges by using extended bolts.

Yet another object of the present invention is to provide a support structure to retrofit power cables in the erected wind turbine where wire ropes suspended in between the T brackets and thereafter the wire ropes are tensed with the turnbuckles which act as tension inducing members.

Yet another object of the present invention is to provide a support structure to retrofit power cables where the cables are clamped at specific distance to the wire ropes by using Fiber reinforced PA clamps fixed to the plates installed to wire ropes.

### Summary of the Invention:

In an aspect of the present invention there is provided a system (400) to retrofit power cables in an erected wind turbine comprising:
i. atleast a retrofit power cable hanging unit comprising:
   a) plurality of T shaped brackets (495) and inclined T shaped brackets (494) mounted on a flange (490) of the wind turbine, by plurality of bolts wherein said T shaped brackets(494) and (495) is connected to plurality of plate (470) through plurality of turnbuckles (480) on its one end, said plate further allows the connection of wire rope (410) through the plurality of clamps (420, 420') on its other end to connect to the next plate; where said turnbuckles (480) provides tension to the wire ropes (410);
   b) plurality of hoisting winch mounted on a tower section of the erected wind turbine, facilitating the pulling of the power cables;
ii. atleast a retrofit clamping unit comprising plurality of u bolts (402) having slotted rail profile around the horizontal length of the power cables, mounted along with the plurality of pot magnet/s (401), wherein the pot magnet comprises a thread portion (407) for mounting the pot magnets (401) on wall of erected wind turbine;
characterized in that:
the plurality of u bolts (402) and plurality of pot magnets (401) together clamps the power cable at a specific distance in the erected wind turbine to damp the oscillation of the power cable; and
plurality of guide rollers (500) mounted on a platform cut-out (520) where said guide rollers are mounted on an adjustable length slider (510) for passing the power cables through it, from the desired position according to the platform cut-out.

In an embodiment, the system comprises following components:
- plurality of T shaped brackets, wherein the plurality of T shaped brackets are mounted on a flange of the erected wind turbine by a plurality of bolts;
- plurality of inclined T shaped brackets, wherein the plurality of inclined T shaped brackets are mounted on the flange of the erected wind turbine by the plurality of bolts, plurality of wire ropes, wherein the plurality of wire ropes is suspended between the plurality of t shaped bracket;
- plurality of turnbuckles, wherein the plurality of wire ropes are attached to the plurality of turnbuckles and the plurality of turnbuckles are configured to provide tension to the plurality of wire ropes;
- plurality of hoisting winch, wherein the plurality of hoisting winch are mounted on a tower section of the erected wind turbine;
- plurality of guide rollers, wherein the plurality of guide rollers is mounted on a platform cut-out and a plurality of power cables are passed through the plurality of guide rollers;
- plurality of clamps, wherein the plurality of power cables are clamped at specific distance to the plurality of wire ropes by using the plurality of clamps; and
- a rod assembly, wherein the rod assembly is configured to deviate the plurality of power cables from linear vertical path to horizontal and vice-versa.

In an embodiment, wherein the T shaped brackets and inclined T shaped brackets are made of a very high strength steel.

In an embodiment, wherein the plurality of plates is fixed to the plurality of wire ropes.

In an aspect of the present invention there is provided a method of operation of a system to retrofit power cables in an erected wind turbine as described above, the method comprising steps of:
a) Mounting brackets comprising T shaped brackets and inclined T shaped brackets, on tower flanges by extended bolts and suspending a plurality of wire ropes in between the T shaped brackets and inclined T shaped brackets;
b) Tightening the wire ropes with the turnbuckles which act as tension inducing members and mounting hoisting winch at top tower section or in the section till which the power cables are needed to be pulled;
c) Pulling the power cables are from the bottom to the top of section passing through guide rollers installed to the platform cut-outs of the erected wind turbine.

### Detail Description of the Drawings

To further clarify advantages and features of the present invention, a more particular description of the invention will be rendered by reference to specific embodiments thereof, which is illustrated in the appended drawings. It is appreciated that these drawings depict only typical embodiments of the invention and are therefore not to be considered limiting of its scope. The invention will be described and explained with additional specificity and detail with the accompanying drawings in which:
Figure 1: illustrates the T bracket of the present invention.
Figure 2: illustrates the T bracket and inclined T bracket of the present invention.
Figure 3: illustrates the assembly in the tower.
Figure 4: illustrates the assembly in the tower.

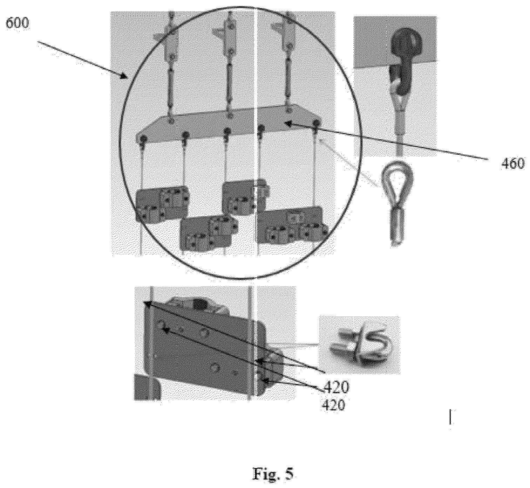

Figure 5: illustrates the U-clamp and D-shackle of the assembly of the present invention.

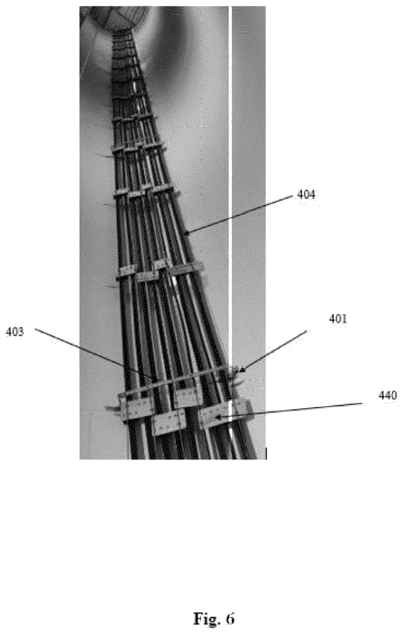

Figure 6: illustrates the implementation of system of the present invention.

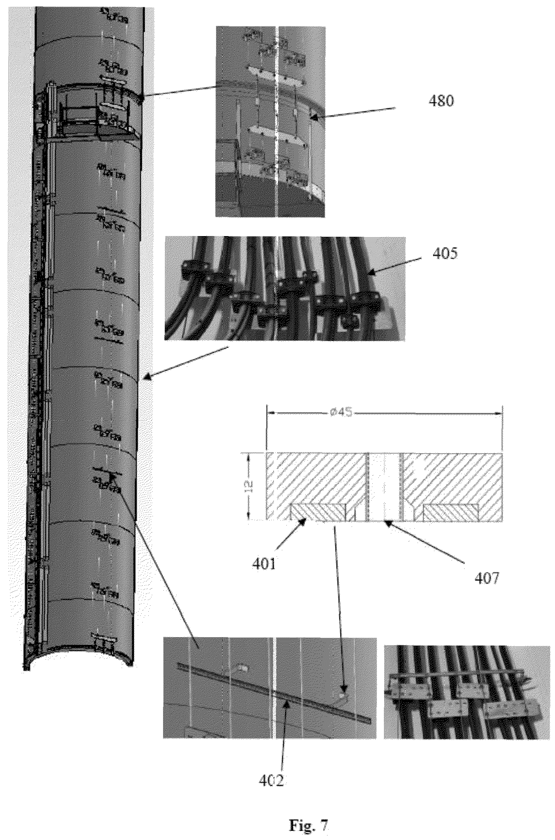

Figure 7: illustrates the arrangement of different components of system of the present invention.
Figure 8: illustrates the guide rollers of the present invention.
Figure 9: illustrates the pot magnet of the present invention.

### Detailed Description of the Invention

For the purpose of promoting an understanding of the principles of the invention, reference will now be made to the embodiment illustrated in the drawings and specific language will be used to describe the same. It will nevertheless be understood that no limitation of the scope of the invention is thereby intended, such alterations and further modifications in the illustrated system, and such further applications of the principles of the invention as illustrated therein being contemplated as would normally occur to one skilled in the art to which the invention relates.

It will be understood by those skilled in the art that the foregoing general description and the following detailed description are exemplary and explanatory of the invention and are not intended to be restrictive thereof. Throughout the patent specification, a convention employed is that in the appended drawings, like numerals denote like components.

Reference throughout this specification to "an embodiment, "another embodiment, "an implementation, "another implementation" or similar language means that a particular feature, structure, or characteristic described in connection with the embodiment is included in at least one embodiment of the present invention. Thus, appearances of the phrase "in an embodiment, "in another embodiment, "in one implementation, "in another implementation, and similar language throughout this specification may, but do not necessarily, all refer to the same embodiment.

The terms "comprises", "comprising", or any other variations thereof, are intended to cover a non-exclusive inclusion, such that a process or method that comprises a list of steps does not include only those steps but may include other steps not expressly listed or inherent to such process or method. Similarly, one or more devices or sub-systems or elements or structures proceeded by "comprises... a" does not, without more constraints, preclude the existence of other devices or other sub-systems or other elements or other structures or additional devices or additional sub-systems or additional elements or additional structures.

In an embodiment, the system of the present invention provides support structure to retrofit power cables in the erected wind turbine.

In an embodiment, the system (400) to retrofit power cables in an erected wind turbine comprises following components:
i. atleast a retrofit power cable hanging unit comprising:
   a) plurality of T shaped brackets (495) and inclined T shaped brackets (494) mounted on a flange (490) of the wind turbine, by plurality of bolts wherein said T shaped brackets(494) and (495) is connected to plurality of plate (470) through plurality of turnbuckles (480) on its one end, said plate further allows the connection of wire rope (410) through the plurality of clamps (420, 420') on its other end to connect to the next plate; where said turnbuckles (480) provides tension to the wire ropes (410);
   b) plurality of hoisting winch mounted on a tower section of the erected wind turbine, facilitating the pulling of the power cables;
ii.) **atleast a retrofit clamping unit** comprising plurality of u bolts (402) having slotted rail profile around the horizontal length of the power cables, mounted along with the plurality of pot magnet/s (401), wherein the pot magnet comprises a thread portion (407) for mounting the pot magnets (401) on wall of erected wind turbine.
Importantly, the system comprises plurality of u bolts (402) and plurality of pot magnets (401) which together clamps the power cable at a specific distance in the erected wind turbine to damp the oscillation of the power cable; and plurality of guide rollers (500) mounted on a platform cut-out (520) where said guide rollers are mounted on an adjustable length slider (510) for passing the power cables through it, from the desired position according to the platform cut-out.

In an embodiment, the retrofit clamping unit comprises atleast 2 magnets present at each 5 meter, wherein the pot magnet comprises 40KG of pull force with the diameter of 45mm and 12 mm thickness
In another embodiment, the system comprises following components:
a) a plurality of T shaped brackets (495), wherein the plurality of T shaped brackets are mounted on a flange (490) of the erected wind turbine by a plurality of bolts;
b) a plurality of inclined T shaped brackets (494), wherein the plurality of inclined T shaped brackets (494) are mounted on the flange (490) of the erected wind turbine by the plurality of bolts;
c) a plurality of wire ropes (410), wherein the plurality of wire ropes (410) is suspended between the plurality of t shaped bracket (495);
d) a plurality of turnbuckles (480), wherein the plurality of wire ropes (410) are attached to the plurality of turnbuckles (480) and the plurality of turnbuckles (480) are configured to provide tension to the plurality of wire ropes (410);
e) a plurality of hoisting winch, wherein the plurality of hoisting winch are mounted on a tower section of the erected wind turbine;
f) a plurality of guide rollers, wherein the plurality of guide rollers is mounted on a platform cut-out and a plurality of power cables are passed through the plurality of guide rollers;
g) a plurality of clamps (420, 420'), wherein the plurality of power cables are clamped at specific distance to the plurality of wire ropes (410) by using the plurality of clamps (420, 420'); and
h) a rod assembly, wherein the rod assembly is configured to deviate the plurality of power cables from linear vertical path.

In an embodiment, the system (400) to retrofit power cables comprises a retrofit power cable hanging unit (600) and a retrofit clamping unit. The retrofit power cable hanging unit includes T shaped brackets (495) and inclined T shaped brackets (494), turnbuckles (480), hoisting winch, clamps (420, 420'). Further, the clamping unit includes u bolts (402) and pot magnet/s (401).

In an embodiment, wherein the T shaped brackets (495) and inclined T shaped brackets (494) are made of a very high strength steel.

In an embodiment, the system to retrofit power cables in an erected wind turbine as claimed in claim 1, wherein a plurality of plates is fixed to the plurality of wire ropes (410).

In an aspect of the present invention there is provided a method of operation of a system (400) to retrofit power cables in an erected wind turbine as claimed in claim 1, the method comprising steps of:
d) Mounting T shaped brackets (495) and inclined T shaped brackets (494) on tower flanges (490) by using extended bolts and suspending a plurality of wire ropes (410) are in between special T shaped brackets (495) and inclined T shaped brackets (494);
e) Tightening the wire ropes (410) with the turnbuckles (480) which act as tension inducing members and mounting hoisting winch at top tower section or in the section till which the power cables are needed to be pulled;
f) Pulling the power cables are from the bottom to the top of section passing through guide rollers installed to the platform cut-outs of the erected wind turbine.

In an embodiment, the system of the present invention comprises T brackets (495) and inclined T shaped brackets (494) which can be mounted on tower flanges (490) by using extended bolts. Wire ropes (410) are then suspended in between these special T brackets (495). These wire ropes are tensed with the turnbuckles (480) which act as tension inducing members. Further, suitable hoisting winch mounted at a suitable location in the top tower section or in the section till which the power cables are needed to be pulled. And then the power cables are pulled from the bottom to the top of section passing through guide rollers installed to the platform cut-outs.

In an embodiment, the cables are clamped at specific distance to the wire ropes by using fiber reinforced PA clamps fixed to the plates installed to wire ropes. The clamping distance is defined by short-circuit force calculation. In this way, the wire ropes carry the load of the power cables. At each flange connection the wire ropes are relaxed to allow the weight to be contained and effectively transferred to the wire rope assembly of that section. For bending below the platform, a deviation rod assembly is designed which easily and effectively allows power cables to divert from linear vertical path.

In an embodiment, the T shape are to be made with a very high strength steel configured to withstand the flange bolts preloads. The shape of the bracket allows it to be integrated on the tower flange readily along with flange bolts.

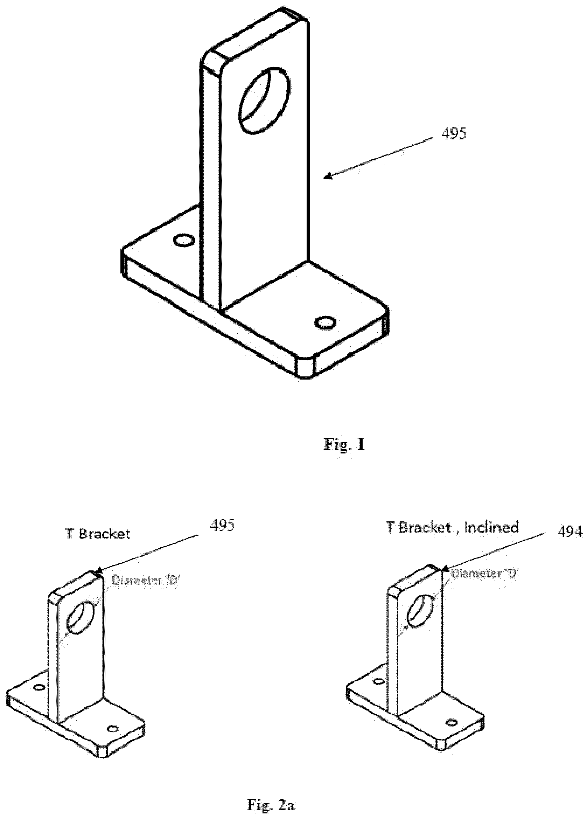

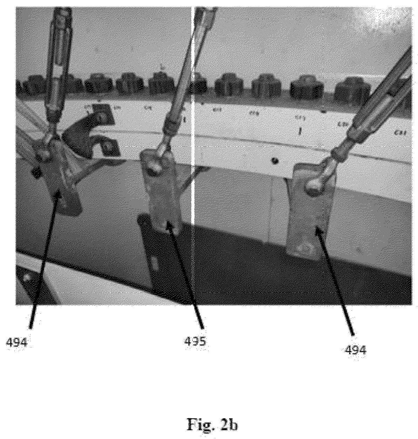

Fig.1 and Fig.2 shows the T brackets and inclined T brackets are to be made with a very high strength steel configured to withstand the flange bolts preloads. The flange of the tower of wind turbine usually have holes throughout its surface. The T brackets and inclined T brackets can be easily mounted on the flanges made at some specific distance inside the diameter of the tower. The mounting work of the T brackets and inclined T brackets by extended bolts does not require any welding work to fix both the brackets. Further, the T brackets inclined T brackets are made of high strength steel material which can stand the load of power cable at ease. The T shaped brackets (495) comprises a hole at top with diameter of 52mm and inclined T shaped brackets (494) comprises a hole at top with diameter of 39mm. Further, the dimensions of T shaped brackets and inclined T shaped brackets are 220 ×190 ×65 ×20mm.

Further, the holes on the surface of the flanges removes the requirement of any hole on the surface of the tower wall. This feature require less man hour for the installation of the power cable and also does not need to alter the already installed components inside the tower of the wind turbine.

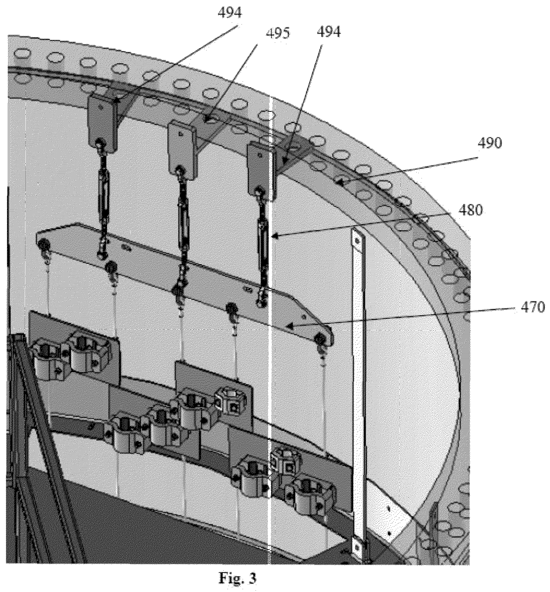

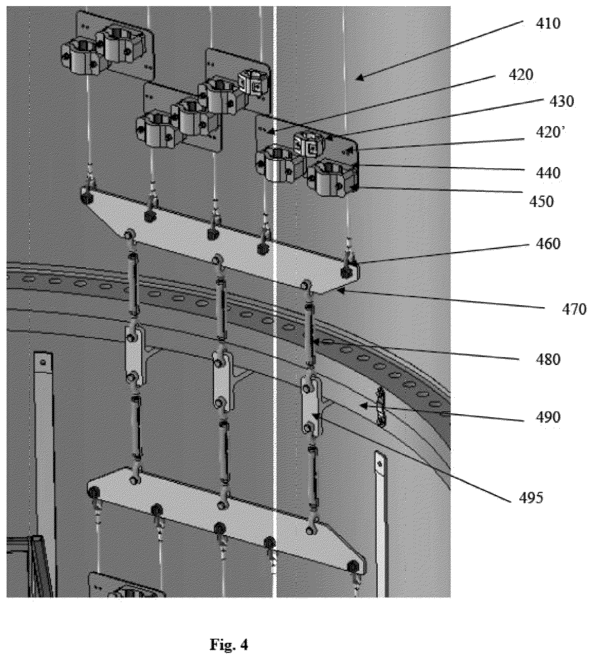

Further, Fig.3 and Fig.4 shows the assembly of different components of the system of the present invention. The system of the present invention comprises T brackets (495) and inclined T shaped brackets (494) which can be mounted on tower flanges (490) by using extended bolts. Wire ropes (410) are then suspended in between these special T brackets (495). These wire ropes are tensed with the turnbuckles (480) which act as tension inducing members. Further, suitable hoisting winch mounted at a suitable location in the top tower section or in the section till which the power cables are needed to be pulled. And then the power cables are pulled from the bottom to the top of section passing through guide rollers installed to the platform cut-outs.

Further, while pulling out the power cable through the tower of the wind turbine, the plurality of guide rollers helps the technicians to push or pull the heavy power cable. The guide rollers are provided at the platform cut out of the tower where the technician passes the power cable through the guide rollers. After pulling the power cable through the guide rollers the power cable, is clamped at the different position throughout the length of the tower of the wind turbine.

Usually, the clamping operation of the power cable is performed by the plurality of clamps (420, 420'). The clamping distance is determined by the technicians to damp the oscillation of tower movement due to strong wind. wherein the plurality of power cables are clamped at specific distance to the plurality of wire ropes (410) by using the plurality of clamps (420, 420').

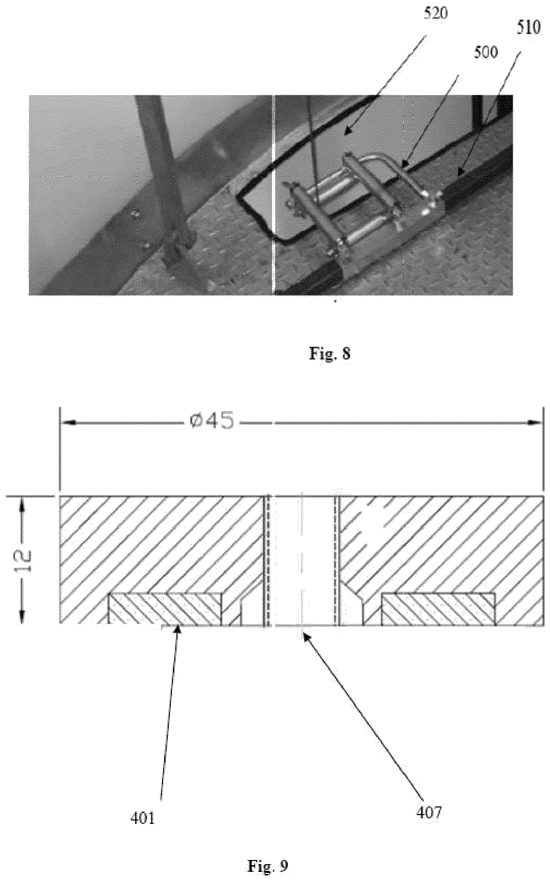

Further, while pulling out the power cable throughout the length of the tower a rod assembly helps the technicians to deviate the power cable from the linear path. Further, the system includes plurality of u bolt (402) having slotted rail profile around its length. The u bolt (402) is mounted over plurality of pot magnet (401) and provide the user-friendly option of installing it inside the tower diameter with ease as no drilling operation is needed to mound the u bolt. Usually, the u bolt (402) and pot magnet (401) together clamps the power cable at a specific distance in the erected wind turbine to damp the oscillation of the power cable. Further, Fig.9 shows the pot magnet (401) of the present invention, the pot magnet (410) includes a thread portion (407) for mounting the pot magnets (401) on wall of erected wind turbine. The pot magnet magnets have 40KG of pull force and diameter of 45mm and 12 mm thick. The pot magnet of the present invention is adapted to clamp the heavy power cables with ease without any need for any hole or welding work in the wall of tower of wind power system.

In an embodiment, the support structure of the present invention is easily adoptable, with no welding or hot works required. Further the support structure is feasible to install to an already installed or new Wind Turbine.

In an embodiment, the support structure of the present invention is configured to be implemented for power upgrade of installed Wind Turbine which required additional runs of cables to be installed to compensate the increase in generation power.

## Claims

1. A system (400) to retrofit power cables in an erected wind turbine comprising:
i. atleast a retrofit power cable hanging unit comprising:
a) plurality of T shaped brackets (495) and inclined T shaped brackets (494) mounted on a flange (490) of the wind turbine, by plurality of bolts wherein said T shaped brackets(494) and (495) is connected to plurality of plate (470) through plurality of turnbuckles (480) on its one end, said plate further allows the connection of wire rope (410) through the plurality of clamps (420, 420') on its other end to connect to the next plate; where said turnbuckles (480) provides tension to the wire ropes (410);
b) plurality of hoisting winch mounted on a tower section of the erected wind turbine, facilitating the pulling of the power cables;
ii. atleast a retrofit clamping unit comprising plurality of u bolts (402) having slotted rail profile around the horizontal length of the power cables, mounted along with the plurality of pot magnet/s (401), wherein the pot magnet comprises a thread portion (407) for being mounted on the wall of erected wind turbine;
wherein :
the plurality of u bolts (402) and plurality of pot magnets (401) together clamps the power cable at a specific distance in the erected wind turbine to damp the oscillation of the power cable; and
plurality of guide rollers (500) mounted on a platform cut-out (520) where said guide rollers are mounted on an adjustable length slider (510) for passing the power cables through it, from the desired position according to the platform cut-out.

2. The system (400) as claimed in claim 1, wherein the T shaped brackets (495) and inclined T shaped brackets (494) are made of a material comprising high strength steel.

3. The system (400) as claimed in claim 1, wherein the T shaped brackets (495) comprises a hole at top with diameter of 52mm, while the inclined T shaped brackets (494) comprises a hole at top with diameter of 39mm.

4. The system (400) as claimed in claim 1, comprises a rod assembly to deviate the plurality of power cables from linear vertical path to horizontal and vice-versa.

5. The system (400) as claimed in claim 1, wherein the power cables are clamped at specific distance to the wire ropes (410) by using Fiber reinforced PA clamps (450) fixed to the plates installed to wire ropes (410).

6. The system (400) as claimed in claim 1, wherein the clamping distance is defined by short-circuit force calculation wherein the wire ropes (410) carry the load of the power cables.

7. The system (400) as claimed in claim 1, wherein the retrofit clamping unit, comprising atleast 2 magnets, present at each 5 meter, wherein the pot magnet comprises 40KG of pull force with the diameter of 45mm and 12 mm thickness

8. A method of retrofitting the power cables in an erected wind turbine by the system as claimed in claim 1, the method comprising steps of:
a) Mounting T shaped brackets (495) and inclined T shaped brackets (494) on tower flanges (490) by the extended bolts and suspending the plurality of wire ropes (410) in between the T shaped brackets (495);
b) Tightening the wire ropes (410) with the turnbuckles (480), which acts as tension inducing members and mounting hoisting winch at top tower section or in the section till which the power cables are needed to be pulled;
c) Pulling the power cables from the bottom to the top of section passing through guide rollers installed to the platform cut-outs of the erected wind turbine, for the retro-fitting.

9. The method as claimed in claim 8, wherein the power cables are pulled from the bottom to the top of section passing through guide rollers installed to the platform cut-outs.

10. The method as claimed in claim 8, wherein at each flange (490) connection, the wire ropes (410) are relaxed to allow the weight to be contained and to be effectively transferred to the wire rope assembly of that section.

## Patentansprüche

1. Ein System (400) zum Nachrüsten von Stromkabeln in einer errichteten Windturbine, umfassend:
i. mindestens eine Nachrüst-Stromkabel-Aufhängeeinheit, umfassend:
a) eine Vielzahl von T-förmigen Halterungen (495) und geneigten T-förmigen Halterungen (494), die an einem Flansch (490) der Windturbine mittels einer Vielzahl von Bolzen montiert sind, wobei die besagten T-förmigen Halterungen (494) und (495) mit einer Vielzahl von Platten (470) über eine Vielzahl von Spannschlössern (480) an ihrem einen Ende verbunden sind, wobei die besagte Platte ferner die Verbindung von Drahtseilen (410) über die Vielzahl von Klemmen (420, 420') an ihrem anderen Ende ermöglicht, um eine Verbindung zur nächsten Platte herzustellen; wobei die besagten Spannschlösser (480) die Drahtseile (410) spannen;
b) eine Vielzahl von Hubwinden, die an einem Turmabschnitt der errichteten Windturbine montiert sind, um das Ziehen der Stromkabel zu erleichtern;
ii. mindestens eine Nachrüst-Klemmeinheit, umfassend eine Vielzahl von U-Bolzen (402) mit einem geschlitzten Schienenprofil entlang der horizontalen Länge der Stromkabel, montiert zusammen mit einer Vielzahl von Topfmagneten (401), wobei der Topfmagnet einen Gewindeabschnitt (407) zur Montage an der Wand der errichteten Windturbine umfasst;
wobei:
die Vielzahl von U-Bolzen (402) und die Vielzahl von Topfmagneten (401) gemeinsam das Stromkabel in einem bestimmten Abstand in der errichteten Windturbine klemmen, um die Schwingung des Stromkabels zu dämpfen; und
eine Vielzahl von Führungsrollen (500), die an einem Plattformausschnitt (520) montiert sind, wobei die besagten Führungsrollen auf einem Schieber (510) mit einstellbarer Länge montiert sind, um die Stromkabel von der gewünschten Position entsprechend dem Plattformausschnitt durch diese hindurchzuführen.

2. Das System (400) nach Anspruch 1, wobei die T-förmigen Halterungen (495) und die geneigten T-förmigen Halterungen (494) aus einem Material bestehen, das hochfesten Stahl umfasst.

3. Das System (400) nach Anspruch 1, wobei die T-förmigen Halterungen (495) ein Loch an der Oberseite mit einem Durchmesser von 52 mm umfassen, während die geneigten T-förmigen Halterungen (494) ein Loch an der Oberseite mit einem Durchmesser von 39 mm umfassen.

4. Das System (400) nach Anspruch 1, wobei das System eine Stangenbaugruppe umfasst, um die Vielzahl von Stromkabeln von einem linearen vertikalen Pfad in einen horizontalen Pfad und umgekehrt umzulenken.

5. Das System (400) nach Anspruch 1, wobei die Stromkabel in einem bestimmten Abstand an den Drahtseilen (410) unter Verwendung von faserverstärkten PA-Klemmen (450) geklemmt werden, die an den an den Drahtseilen (410) installierten Platten befestigt sind.

6. Das System (400) nach Anspruch 1, wobei der Klemmabstand durch eine Kurzschlusskraftberechnung definiert ist, wobei die Drahtseile (410) die Last der Stromkabel tragen.

7. Das System (400) nach Anspruch 1, wobei die Nachrüst-Klemmeinheit, die mindestens 2 Magnete umfasst, alle 5 Meter vorhanden ist, wobei der Topfmagnet eine Zugkraft von 40 kg bei einem Durchmesser von 45 mm und einer Dicke von 12 mm aufweist.

8. Ein Verfahren zum Nachrüsten der Stromkabel in einer errichteten Windturbine mittels des Systems nach Anspruch 1, wobei das Verfahren die folgenden Schritte umfasst:
a) Montieren von T-förmigen Halterungen (495) und geneigten T-förmigen Halterungen (494) an Turmflanschen (490) mittels der verlängerten Bolzen und Aufhängen der Vielzahl von Drahtseilen (410) zwischen den T-förmigen Halterungen (495);
b) Spannen der Drahtseile (410) mit den Spannschlössern (480), die als spannungserzeugende Elemente wirken, und Montieren einer Hubwinde am oberen Turmabschnitt oder in dem Abschnitt, bis zu dem die Stromkabel gezogen werden müssen;
c) Ziehen der Stromkabel von dem unteren Ende zu dem oberen Ende des Abschnitts, wobei sie durch Führungsrollen geführt werden, die an den Plattformausschnitten der errichteten Windturbine installiert sind, für die Nachrüstung.

9. Das Verfahren nach Anspruch 8, wobei die Stromkabel von unten nach oben des Abschnitts gezogen werden, wobei sie durch Führungsrollen geführt werden, die an den Plattformausschnitten installiert sind.

10. Das Verfahren nach Anspruch 8, wobei an jeder Flanschverbindung (490) die Drahtseile (410) entspannt werden, um das Gewicht aufzunehmen und effektiv auf die Drahtseilbaugruppe dieses Abschnitts zu übertragen.

## Revendications

1. Un système (400) pour rénover des câbles d'alimentation dans une éolienne érigée comprenant :
i. au moins une unité de suspension de câbles d'alimentation de rénovation comprenant :
a) une pluralité de supports en forme de T (495) et de supports en forme de T inclinés (494) montés sur une bride (490) de l'éolienne, par une pluralité de boulons, dans lequel lesdits supports en forme de T (494) et (495) sont reliés à une pluralité de plaques (470) par l'intermédiaire d'une pluralité de tendeurs (480) à l'une de leurs extrémités, ladite plaque permet en outre la liaison d'un câble métallique (410) par l'intermédiaire de la pluralité de serre-câbles (420, 420') sur son autre extrémité pour se connecter à la plaque suivante ; où lesdits tendeurs (480) fournissent une tension aux câbles métalliques (410) ;
b) une pluralité de treuils de levage montés sur une section de tour de l'éolienne érigée, facilitant le tirage des câbles d'alimentation ;
ii. au moins une unité de serrage de rénovation comprenant une pluralité de boulons en U (402) ayant un profil de rail à fente sur la longueur horizontale des câbles d'alimentation, montés avec la pluralité d'aimants en pot (401), dans lequel l'aimant en pot comprend une partie filetée (407) pour être monté sur la paroi de l'éolienne érigée;
dans lequel :
la pluralité de boulons en U (402) et la pluralité d'aimants en pot (401) serrent ensemble le câble d'alimentation à une distance spécifique dans l'éolienne érigée pour amortir l'oscillation du câble d'alimentation ; et
une pluralité de rouleaux de guidage (500) montés sur une découpe de plateforme (520) où lesdits rouleaux de guidage sont montés sur un coulisseau de longueur réglable (510) pour faire passer les câbles d'alimentation à travers celui-ci, depuis la position souhaitée en fonction de la découpe de plateforme.

2. Le système (400) selon la revendication 1, dans lequel les supports en forme de T (495) et les supports en forme de T inclinés (494) sont constitués d'un matériau comprenant de l'acier à haute résistance.

3. Le système (400) selon la revendication 1, dans lequel les supports en forme de T (495) comprennent un trou en haut d'un diamètre de 52 mm, tandis que les supports en forme de T inclinés (494) comprennent un trou en haut d'un diamètre de 39 mm.

4. Le système (400) selon la revendication 1, comprend un ensemble de tige pour dévier la pluralité de câbles d'alimentation d'un chemin vertical linéaire à un chemin horizontal et vice versa.

5. Le système (400) selon la revendication 1, dans lequel les câbles d'alimentation sont serrés à une distance spécifique sur les câbles métalliques (410) en utilisant des serre-câbles en PA renforcé de fibres (450) fixés aux plaques installées sur les câbles métalliques (410).

6. Le système (400) selon la revendication 1, dans lequel la distance de serrage est définie par un calcul de force de court-circuit dans lequel les câbles métalliques (410) supportent la charge des câbles d'alimentation.

7. Le système (400) selon la revendication 1, dans lequel l'unité de serrage de rénovation, comprenant au moins 2 aimants, est présente tous les 5 mètres, dans lequel l'aimant en pot comprend une force de traction de 40 kg avec un diamètre de 45 mm et une épaisseur de 12 mm.

8. Un procédé de rénovation des câbles d'alimentation dans une éolienne érigée par le système selon la revendication 1, le procédé comprenant les étapes de :
a) Montage de supports en forme de T (495) et de supports en forme de T inclinés (494) sur des brides de tour (490) par les boulons allongés et suspension de la pluralité de câbles métalliques (410) entre les supports en forme de T (495) ;
b) Serrage des câbles métalliques (410) avec les tendeurs (480), qui agissent comme des éléments inducteurs de tension, et montage d'un treuil de levage dans la section de tour supérieure ou dans la section jusqu'à laquelle les câbles d'alimentation doivent être tirés ;
c) Tirage des câbles d'alimentation du bas vers le haut de la section en passant par des rouleaux de guidage installés dans les découpes de plateforme de l'éolienne érigée, pour la rénovation.

9. Le procédé selon la revendication 8, dans lequel les câbles d'alimentation sont tirés du bas vers le haut de la section en passant par des rouleaux de guidage installés dans les découpes de plateforme.

10. Le procédé selon la revendication 8, dans lequel à chaque connexion de bride (490), les câbles métalliques (410) sont relâchés pour permettre au poids d'être contenu et d'être effectivement transféré à l'ensemble de câble métallique de cette section.
